# EUROPEAN PATENT APPLICATION

(11) **EP 0 570 325 A1**
(43) Date of publication of application: **18.11.1993**
(21) Application number: 93630038.3
(22) Date of filing: 14.05.1993
(51) Int. Cl.: H04B 1/38, H01Q 1/27, H04B 7/204

(54) **Portable communication terminal**

(30) Priority: 15.05.1992 IL 101875
(71) Applicant: State of Israel Ministry of Defence Raphael Armament Development Authority, Haifa (IL)
(72) Inventor: Livne, Adam, Haifa (IL)
(74) Representative: Weydert, Robert

(57) **Abstract**

The portable terminal particularly useful in a mobile satellite communication system includes a briefcase (2) having a pivotally mounted lid (6), a flat-type antenna (8) carried by the lid (6), a transmitter/receiver (20) housed within the briefcase lid (6) and connected to the antenna (8), a personal computer (30) within the briefcase (2), and retainers (10, 12) for retaining the lid (6) in any one of a plurality of inclined positions to select the direction of orientation of the antenna (8) with respect to the horizontal plane.

## Description

The present invention refers to a portable communication terminal, and particularly to one useful in a mobile satellite communication system, such as the Inmarsat system.

The Inmarsat system is a satellite communication system including a global network connected to the international and national terrestrial telecommunication network to allow communication between Mobile Earth Stations (MES) and telephone or telex subscribers around the world. Coast Earth Stations (CES) serve as "bridges" to the terrestrial network. The communication services include voice, data, facsimile and telex, depending on the type of mobile station used. The network presently uses four satellites to cover the entire globe except for regions above 70 degrees latitude.

An object of the present invention is to provide a mobile terminal particularly useful in a Mobile Earth Station in the Inmarsat system, but also usable in other communication systems.

According to the present invention, there is provided a portable terminal particularly useful in a mobile satellite communication system, comprising: a briefcase including a handle and a pivotally mounted lid; an antenna carried by the lid; a transmitter/receiver housed within the briefcase and connected to the antenna; and retainer means for retaining the lid in any one of a plurality of inclined positions to select the direction of orientation of the antenna with respect to the horizontal plane.

According to further features in the preferred embodiment of the invention described below, the antenna is a flat-type antenna incorporated within the lid so as not to be viewable externally of the briefcase. In addition, the retainer means comprises a pair of rods having one of their ends pivotal to the lid on opposite sides thereof, and their opposite ends receivable in any one of a plurality of openings formed in the opposite sides of the briefcase, to retain the lid in any one of a plurality of inclined positions.

According to additional features in the described preferred embodiment, the transmitter/receiver is housed within the lid, and the portable terminal further includes a personal computer, having a keyboard and a display, within the briefcase and removable therefrom. The personal computer is connected to the transmitter/receiver via a modem/ controller also carried by the lid of the briefcase.

According to still further features, the transmitter/receiver includes a radio-frequency head also carried by the lid. In addition, the terminal may include a printer within the briefcase and removable therefrom. A battery power supply carried by the lid powers the transmitter/receiver.

The complete terminal can be packaged to weigh less than 8 kilograms so as to be highly portable. Whenever the terminal is to be used, the briefcase is opened; the antenna is oriented at the proper direction and inclination according to the location of the terminal; and the personal computer and printer are removed to permit communication via the satellite and the Coast Earth Stations with other Mobile Earth Stations or other telecommunication network subscribers in the network.

Further features and advantages of the invention will be apparent from the description below.

The invention is herein described, by way of example only, with reference to the accompanying drawings, wherein:
Fig. 1 illustrates one form of portable terminal constructed in accordance with the present invention;
Fig. 2 is a side elevational view illustrating the manner of inclining the lid so as to properly orient the antenna therein;
Fig. 3 illustrates the portable terminal of Fig. 1 with its components removed from the briefcase for use in transmitting and/or receiving messages via the satellite communication system; and
Fig. 4 is a view similar to that of Fig. 3 but illustrating more details of a preferred construction of the portable terminal.

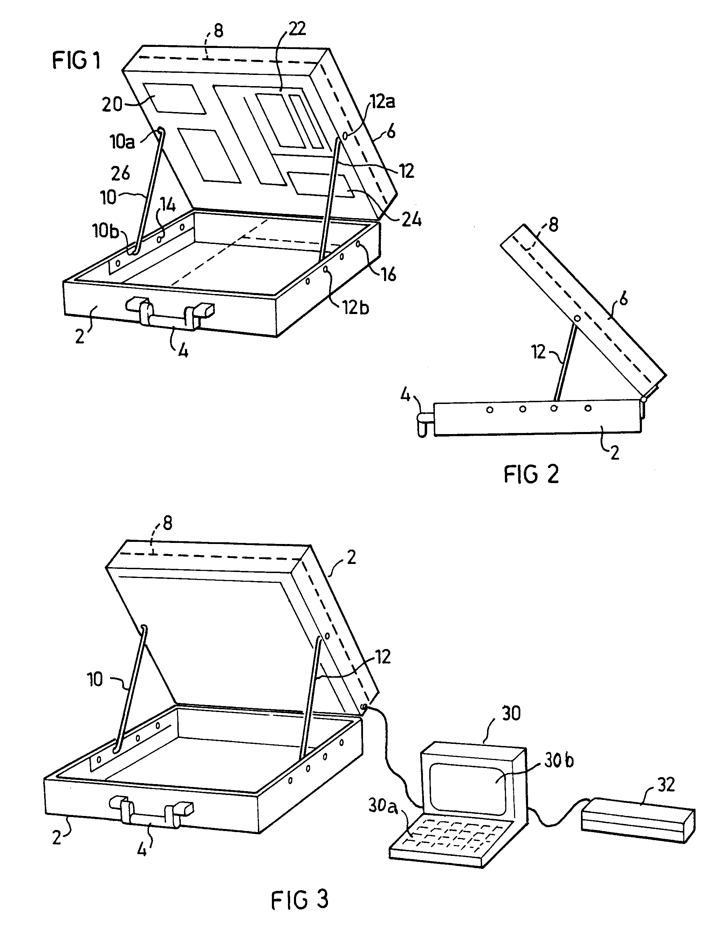

The portable terminal illustrated in Figs. 1-3 of the drawings comprises a briefcase, generally designated 2, including a handle 4 and a pivotally mounted lid 6. A flat-type antenna 8 is incorporated in the lid 6. The lid is pivotal to any one of a plurality of inclined positions and is retained in a selected inclined position by a pair of elevation rods 10, 12. Ends 10a, 12a of the elevation rods 10, 12 are pivotally mounted to opposite sides of lid 6, and their opposite ends 10b, 12b are received in selected openings 14, 16 formed in the opposite sides of the briefcase 2. It will thus be seen that by placing ends 10b, 12b of the elevation rods 10, 12 in selected openings 14, 16, lid 6 may be retained in any one of a plurality of inclined positions to select the inclination of its antenna 8 with respect to the horizontal plane in order to point it towards the satellite.

The illustrated portable terminal further includes a radio-frequency transmitter/receiver (i.e., a transceiver) head 20, carried by the lid 6 and connected to its antenna 8. The briefcase further includes a modem/controller unit 22, a power supply 24, and a battery 26, all carried by the lid 6.

Disposed within the briefcase 2 are a personal computer 30 and a printer 32. As shown in Fig. 3, the latter units are adapted to be removed from the briefcase to facilitate their use when using the terminal for transmitting and/or receiving messages via the antenna 8.

All the foregoing components to be included in the portable terminal are existing units, and therefore details of their construction and operation are not set forth herein. The antenna is a flat high-gain antenna which has a horizontal beamwidth of about 20 degrees and a vertical beamwidth of about 38 degrees. The directional orientation of the antenna depends on the location of the user. Directing the antenna can be performed very easily and quickly by turning the briefcase horizontally to select the proper azimuth, and by tilting the lid 6 to select the proper elevation. Upon inputting the user's longitude and latitude positions, the software included in the computer would supply the user with the azimuth angle for orienting the briefcase, and the elevational angle for tilting the lid.

The personal computer 30 is preferably a known notebook PC, including a keyboard 30a and a display 30b pivotally mounted to the keyboard so as to permit folding in a compact form when housed within the briefcase. The printer 32 may be a known miniature type printer, but could be omitted.

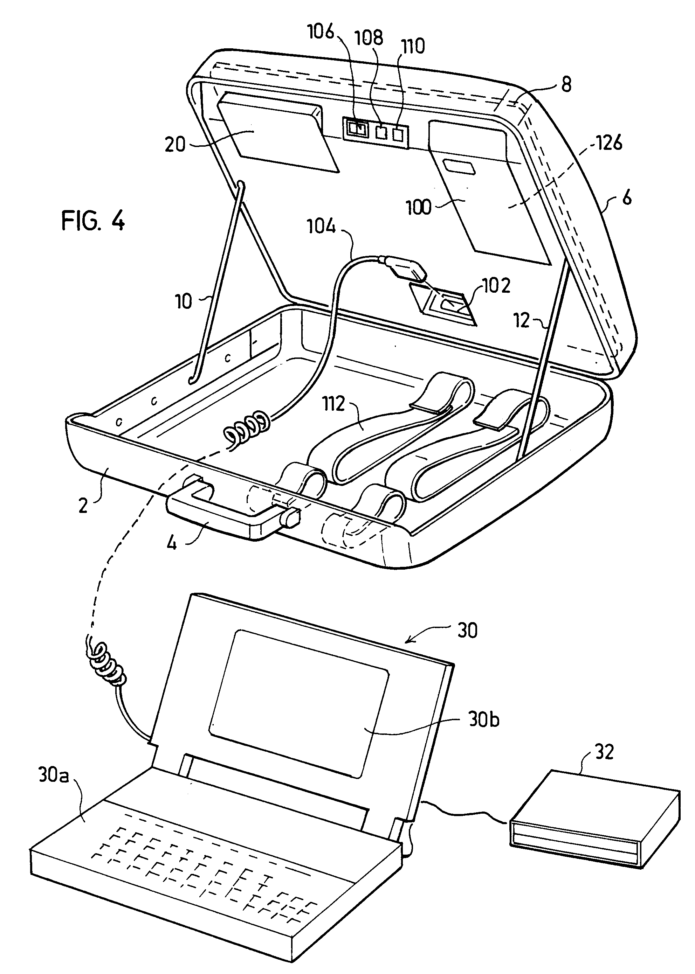

Fig. 4 illustrates more details of a preferred construction of the portable terminal. To facilitate understanding, the same reference numerals are used for identifying the corresponding parts as in Figs. 1-3.

Thus, in the construction illustrated in Fig. 4, the battery compartment 26 in the lid 6 is closed by a removable cover 100 to facilitate access to the batteries within that compartment. The lid also includes a connector 102 which is accessible only when the lid is open. Connector 102 connects, via the electrical lead 104, the electrical components carried by the lid to the computer 30 and to the printer 32 when removed from the briefcase. Connector 102 may also be used for recharging the batteries within the battery compartment 26.

Lid 6 further includes an on/off switch 106, a power light indicator 108, and a LOGIN light indicator 110, all accessible to the user when the lid 6 is in its open position. The briefcase 2 further includes straps 112 for removably holding the computer 30 within the briefcase, and also the printer 32 when provided.

In all other respects, the portable terminal illustrated in Fig. 4 is constructed and used in the same manner as described above with respect to Figs. 1-3.

While the invention has been described with respect to one preferred embodiment, it will be appreciated that many other variations, modifications and applications of the invention may be made.

## Claims

1. A portable terminal particularly useful in a mobile satellite communication system, comprising:
a briefcase including a handle and a pivotally mounted lid;
an antenna carried by said lid;
a transmitter/receiver housed within the briefcase and connected to said antenna;
and retainer means for retaining the lid in any one of a plurality of inclined positions to select the direction of orientation of the antenna with respect to the horizontal plane.

2. The portable terminal according to Claim 1, wherein said antenna is a flat-type antenna incorporated within the lid so as not to be viewable externally of the briefcase.

3. The portable terminal according to either of Claims 1 or 2, wherein said retainer means comprises a pair of rods having one of their ends pivotal to said lid on opposite sides thereof, and their opposite ends receivable in any one of a plurality of openings formed in the opposite sides of the briefcase, to retain the lid in any one of a plurality of inclined positions.

4. The portable terminal according to any one of Claims 1-3, wherein said transmitter/receiver is housed within said lid, and said terminal further includes a personal computer, having a keyboard and a display, disposed within the briefcase and removable therefrom, said personal computer being connected to said transmitter/receiver via a modem/controller disposed within said briefcase.

5. The portable terminal according to Claim 4, wherein said modem/controller is carried by the lid of the briefcase.

6. The portable terminal according to eithr of Claim 4 or 5, wherein said transmitter/receiver includes a radio-frequency head carried by said lid.

7. The portable terminal according to any one of Claims 4-6, further including a printer disposed within the briefcase and removable therefrom, said printer being connectable to said transmitter/receiver.

8. The portable terminal according to any one of Claims 4-7, further including a battery power supply carried by the lid of the briefcase for powering said transmitter/receiver.

9. The portable terminal according to Claim 8, wherein said lid further includes a connector accessible only when said lid is open for connecting the personal computer, when removed from the briefcase, to the electrical components carried by the lid.

10. The portable terminal according to any one of Claims 4-9, wherein said briefcase further includes straps for removably holding said personal computer within the briefcase when not in use.
